# EUROPEAN PATENT SPECIFICATION

(11) **EP 4 372 151 B1**
(45) Date of publication and mention of the grant of the patent: **22.01.2025**
(21) Application number: 23158748.6
(22) Date of filing: 27.02.2023
(51) Int. Cl.: E02B 7/28

(54) **GATE WATER SUPPLEMENT DEVICE**
TORWASSERERGÄNZUNGSVORRICHTUNG
DISPOSITIF DE PORTE POUR AJOUT D'EAU

(30) Priority: 15.11.2022 CN 202211430264
(43) Date of publication of application: 22.05.2024
(73) Proprietor: China Three Gorges Corporation, Wuhan, Hubei 430010 (CN); China Three Gorges Construction Engineering Corporation, Beijing 101199 (CN)
(72) Inventor: TAN, Zhiguo, Wuhan, Hubei 430010 (CN); GAO, Peng, Wuhan, Hubei 430010 (CN); WU, Guolin, Wuhan, Hubei 430010 (CN); YIN, Lv, Wuhan, Hubei 430010 (CN); LIU, Tao, Wuhan, Hubei 430010 (CN); GAO, Qingcong, Wuhan, Hubei 430010 (CN)
(74) Representative: Barker Brettell LLP

(56) References cited:
- JP-A- 2018 059 277
- JP-A- 2018 059 377
- KR-B1- 101 230 778

## Description

### TECHNICAL FIELD

The present disclosure relates to the technical field of water conservancy and hydropower projects, and the invention is directed towards a gate water supplement device.

### BACKGROUND

Lowering gate and starting reservoir impoundment of hydropower station project are major nodes of the project, and the generator unit can only be commissioned and operated after the impoundment has been finished. The gate lowering of the hydropower station project is to lower the blocking gate of the diversion tunnel for temporarily passing water during the construction period. After the gate is lowered, the downstream river channel of the project may be temporarily cut off before the reservoir water level rises to the point where the flood release structures of the hydropower station hub can discharge, which has a great impact on the downstream river channel ecology. Document KR 101 230 778 B1 discloses an example of a gate water supplement device. Therefore, at the beginning of the design of the hydropower station project, the relevant measures of water supplement to the downstream ecology will be considered simultaneously during the gate lowering period. At present, it is generally adopted to arrange special ecological water supplement channel and so on, which has the problems of large resource investment and inaccurate control.

### SUMMARY

Therefore, the technical problem to be solved by the present invention is to overcome that arranging special ecological water supplement channel requires more resources and the control is not accurate enough at the beginning of the design of the hydropower station project in the prior art, so as to provide a gate water supplement device.

In order to solve the above-mentioned problems, the present invention provides a gate water supplement device according to claim 1, comprising:
a gate body configured to be arranged in a dam body, wherein a lower part of the gate body is provided with an ecological water supplement channel, an opening and closing member is provided in the ecological water supplement channel, the downstream face of the gate body is provided with a contactor member which is communicated with the opening and closing member through lines;
a control structure configured to be arranged in the dam body, wherein the control structure comprises a controller and a contactor frame arranged towards the downstream face, the controller is communicated with the contactor frame through lines, after the gate body falls to a predetermined position, the contactor frame is in contact with the contactor member, the controller controls the opening or closing of the opening and closing member through lines to control the water flow in the ecological water supplement channel.

Optionally, the contactor member comprises a signal terminal and a power supply terminal; the contactor frame is provided with a signal contactor and a power supply contactor adapted to the contactor member, the signal contactor is plugged with the signal terminal, and the power supply contactor is plugged with the power supply terminal.

Optionally, the signal terminal and the power supply terminal are both conical opening structure, the signal contactor of the contactor frame extends into the opening of the signal terminal, and the power supply contactor extends into the opening of the power supply terminal, the contactor frame is an arch structure.

Optionally, a power supply line and a signal line are connected between the contactor frame and the controller, the power supply line and the signal line are connected between the contactor member and the opening and closing member.

Optionally, an insulating pad is arranged between the signal terminal and the power supply terminal.

Optionally, the gate water supplement device further comprises a tube body arranged in the dam body, wherein a line between the contactor frame and the controller is arranged in the tube body, and the contactor frame is at least partially arranged in the tube body.

Optionally, an elastic member is arranged between the contactor frame and the tube body, and the elastic member is in a compressed state when the contactor frame is not in contact with the contactor member.

Optionally, the end of the tube body towards the gate body is provided with a sealing cover plate which is communicated with the controller through signal.

Optionally, the number of the opening and closing member in the ecological water supplement channel is at least two, and each opening and closing member is connected with the power supply line and the signal line.

Optionally, the water inlet of the ecological water supplement channel is also provided with a slag blocking grille.

The technical solution of the present invention has the following advantages:
1. The gate water supplement device provided in the present invention comprises: a gate body configured to be arranged in a dam body, wherein a lower part of the gate body is provided with an ecological water supplement channel, an opening and closing member is provided in the ecological water supplement channel, the downstream face of the gate body is provided with a contactor member which is communicated with the opening and closing member through lines; a control structure configured to be arranged in the dam body, wherein the control structure comprises a controller and a contactor frame arranged towards the downstream face, the controller is communicated with the contactor frame through lines, after the gate body falls to a predetermined position, the contactor frame is in contact with the contactor member, the controller controls the opening or closing of the opening and closing member through lines to control the water flow in the ecological water supplement channel. The lower part of the gate body is provided with an ecological water supplement channel, the gate body is provided with an ecological water supplement channel, and it is not necessary to build special ecological water supplement channel and opening and closing member in the dam body during the design and construction stages, which can save resources. Meanwhile, the downstream face of the gate body is provided with a contactor member, and the control structure is provided with a contactor member towards the downstream face. When the gate body falls to a predetermined position, the contactor frame contacts the contactor member to connect electrical signals or communication signals, and the controller controls the opening or closing of the opening and closing member to control the water flow in the ecological water supplement channel, which has the advantage of convenience and accuracy. The ecological water supplement problem of the downstream river channel during the period of lowering the gate can be completely solved and a large amount of resource investment can be saved by arranging an ecological water supplement channel on the gate body and ensuring that the gate can also be opened and closed normally after being lowered.
   In contrast, after the gate is lowered, impoundment begins and the diversion tunnel is blocked, the opening and closing equipment of gate will also be submerged with the rise of the reservoir water level. Therefore, it is impossible to use its opening and closing equipment or its layout platform to arrange ecological water supplement control equipment, which has the problem of low reliability. In addition, if the water supplement hole fails to close or cannot be closed tightly, a large amount of leakage may occur under the high water head of the reservoir, affecting the safe operation of the project. Meanwhile, it will be very difficult to stop leakage under high water level, which will directly lead to the lagging process of reservoir water storage and even power generation, causing huge negative impacts and economic losses to the project. The gate water supplement device provided by the present invention overcomes the above mentioned problems and has the advantages of convenient opening and closing and accurate control.
2. In the gate water supplement device provided in the present invention, the contactor member comprises a signal terminal and a power supply terminal; the contactor frame is provided with a signal contactor and a power supply contactor adapted to the contactor member, the signal contactor is plugged with the signal terminal, and the power supply contactor is plugged with the power supply terminal, so that the signal of the controller is transmitted to the signal terminal through the signal contactor and to the power supply terminal through the power supply contactor.
3. In the gate water supplement device provided in the present invention, the signal terminal and the power supply terminal are both conical opening structure, the signal contactor of the contactor frame extends into the opening of the signal terminal, and the power supply contactor extends into the opening of the power supply terminal. When the gate body is about to fall to the predetermined position, the signal contactor enters the conical opening structure of the signal terminal and the power supply contactor enters the conical opening structure of the power supply terminal until the gate body falls to the predetermined position. The configuration of conical opening structure is convenient for the signal contactor and power supply contactor to be accurately and reliably connected together during the connection process without poor contact due to position offset, so that the signal contactor and signal terminal, power supply contactor and power supply terminal can be better connected.
4. In the gate water supplement device provided in the present invention, a power supply line and a signal line are connected between the contactor frame and the controller, the power supply line and the signal line are connected between the contactor member and the opening and closing member, and the insulating plate is arranged between the power supply line and the signal line, power supply line transmits current, signal line transmits signal, and the arrangement of insulating plate avoids signal interference between power supply line and signal line.
5. In the gate water supplement device provided in the present invention, an insulating pad is arranged between the signal terminal and the power supply terminal, the insulating pad can avoid interference between current signal and communication signal, as well as conductive interference with the metal door body and influence on working effect.
6. The gate water supplement device provided in the present invention further comprises a tube body arranged in the dam body, since a line between the contactor frame and the controller is arranged in the tube body, and the contactor frame is at least partially arranged in the tube body, the tube body can also protect the lines between the contactor frame and the controller, as well as the contactor frame, and can also solve the problem that the contactor frame and the line pass through the dam structure.
7. In the gate water supplement device provided in the present invention, an elastic member is arranged between the contactor frame and the tube body, and the elastic member is in a compressed state when the contactor frame is not in contact with the contactor member. After the contactor frame is in contact with the contactor member, the compressed elastic member makes the contactor frame have the force to move towards the contactor member, so as to push the contactor frame to move towards the contactor member until the signal contactor of the contactor frame is successfully connected to the signal terminal, and the power supply contactor is successfully connected to the power supply terminal.
8. In the gate water supplement device provided in the present invention, the end of the tube body towards the gate body is provided with a sealing cover plate which is communicated with the controller through signal, the controller controls the opening or closing of the sealing cover plate to control the extension or retraction of the contactor frame.
9. In the gate water supplement device provided in the present invention, the number of the opening and closing member in the ecological water supplement channel is at least two, and each opening and closing member is connected to the power supply line and the signal line. Two or more opening and closing members play the role of backup to each other to avoid affecting the normal operation of the ecological water supplement channel due to problem with one of opening and closing members. The controller of the opening and closing members is arranged inside the gate to isolate the water upstream of the gate.
10. In the gate water supplement device provided in the present invention, the water inlet of the ecological water supplement channel is also provided with a slag blocking grille, the slag blocking grille can prevent fish and other organisms and pollutants in water from entering the ecological water supplement channel, so as to avoid affecting the operation of the ecological water supplement channel and the opening and closing of the opening and closing member.

### BRIEF DESCRIPTION OF THE DRAWINGS

In order to more clearly explain the specific embodiments of the present invention or the technical solution in the prior art, the drawings needed in the specific embodiments or description of the prior art will be briefly introduced hereinafter. Obviously, the drawings in the following description are some embodiments of the present invention. For an ordinary person skilled in the art, he can also obtain other drawings based on these drawings without expenditure of any creative labor.
Figure 1 is the structural schematic diagram of the dam body and gate water supplement device provided in the embodiment of the present invention;
Figure 2 is the structural schematic diagram of the dam body provided in the embodiment of the present invention;
Figure 3 is the structural schematic diagram of position of tube body close to gate body provided in the embodiment of the present invention;
Figure 4 is the side schematic diagram of the gate structure in the dam body provided in the embodiment of the present invention;
Figure 5 is the structural schematic diagram of the ecological water supplement channel provided in the embodiment of the present invention;
Figure 6 is the structural schematic diagram of the contactor member provided in the embodiment of the present invention;
Figure 7 is the structural schematic diagram of the contactor frame provided in the embodiment of the present invention.

Reference numeral:
1. Dam body; 2. Gate body; 3. Protective tube 4. Slag blocking grille; 5. First opening and closing member; 6. Second opening and closing member; 7. Contactor frame; 8. Diversion tunnel; 9. Sealing cover plate; 10. Manhole; 11. Tube body; 12. Elastic member; 13. Guide groove; 14. Elevator; 15. Controller; 16. Lower part; 17. Insulating pad; 18. Contactor member; 19. Signal terminal; 20. Power supply terminal; 21. Signal line; 22. Power supply line; 23. Ecological water supplement channel; 24. Signal contactor; 25. Power supply contactor; 26. Clapboard groove.

### DETAILED DESCRIPTION

The technical solution of the present invention will be described clearly and completely hereinafter in combination with the drawings. Obviously, the described embodiments are part of the embodiments of the present invention, not all of them. Based on the embodiments of the present invention, all other embodiments obtained by an ordinary person skilled in the art without expenditure of any creative work belong to the protection scope of the present invention.

In the description of the present invention, it should be noted that the orientations or position relationships indicated by the terms "center", "top", "bottom", "left", "right", "vertical", "horizontal", "inside", "outside", etc. are based on the orientation or position relationship shown in the drawings, only used for the convenience of describing the present invention and simplifying the description, rather than indicating or implying that the device or element referred to must have a specific orientation, be constructed and operated in a specific orientation, and therefore cannot be understood as a limitation of the present invention. In addition, the terms "first", "second" and "third" are only used for descriptive purposes and cannot be understood as indicating or implying relative importance.

In the description of the present invention, it should be noted that, unless otherwise clearly specified and defined, the terms "installation", "connection" and "communication" should be understood in a broad sense, for example, they can be fixed connection, detachable connection or integrated connection; they can be mechanical connection or electrical connection; they can be direct connection, or indirect connection through intermediate media, they can be the internal communication between two elements. For an ordinary person skilled in the art, the specific meaning of the above mentioned terms in the invention can be understood according to specific cases.

In addition, the technical features involved in different embodiments of the present invention described below can be combined with each other as long as they do not conflict with each other and they are within the scope of the invention that is defined by the appended claims.

### Embodiment 1

The present invention provides a gate water supplement device, comprising: a gate body 2 configured to be arranged in a dam body 1, wherein a lower part 16 of the gate body 2 is provided with an ecological water supplement channel 23, an opening and closing member is provided in the ecological water supplement channel 23, the downstream surface of the gate body 2 is provided with a contactor frame 7 which is communicated with the opening and closing member through lines; a control structure configured to be arranged in the dam body 1, wherein the control structure comprises a controller 15 and a contactor frame 7 arranged towards the downstream surface, the controller 15 is communicated with the contactor frame 7 through lines, after the gate body 2 falls to a predetermined position, the contactor frame 7 is in contact with the contactor member 18, the controller 15 controls the opening or closing of the opening and closing member through lines to control the water flow in the ecological water supplement channel 23.

The lower part 16 of the gate body 2 is provided with an ecological water supplement channel 23, the gate body is provided with an ecological water supplement channel 23, and it is not necessary to build special ecological water supplement channel and opening and closing member during the design and construction stages, which can save resources, use one thing for multiple purposes, and improve the efficiency of water supplement. Meanwhile, the downstream face of the gate body 2 is provided with a contactor member 18, and the control structure is provided with a contactor member 18 towards the downstream face. When the gate body 2 falls to a predetermined position, the contactor frame 7 contacts the contactor member 18 to connect electrical signals or communication signals, and the controller 15 controls the opening or closing of the opening and closing member to control the water flow in the ecological water supplement channel 23, which has the advantage of convenience and accuracy.

### Embodiment 2

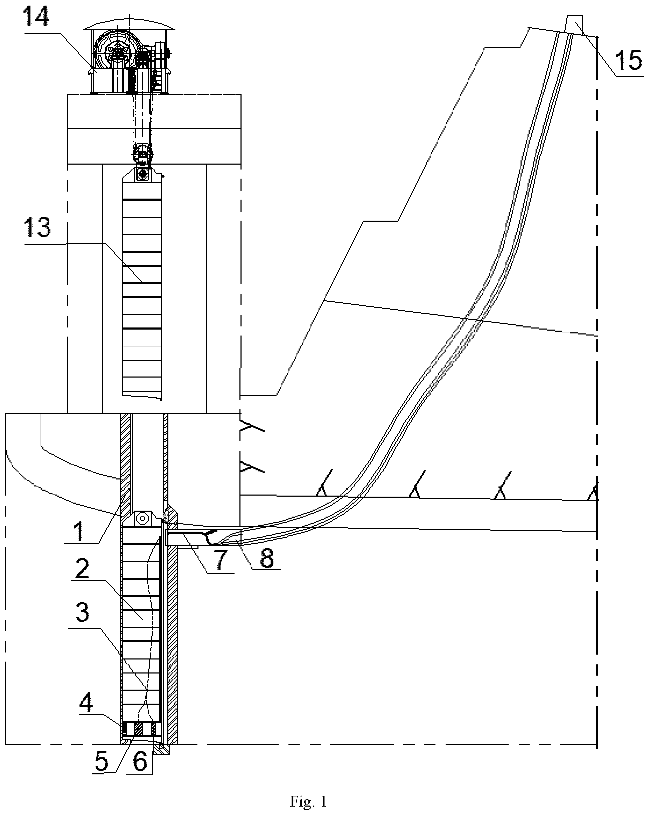

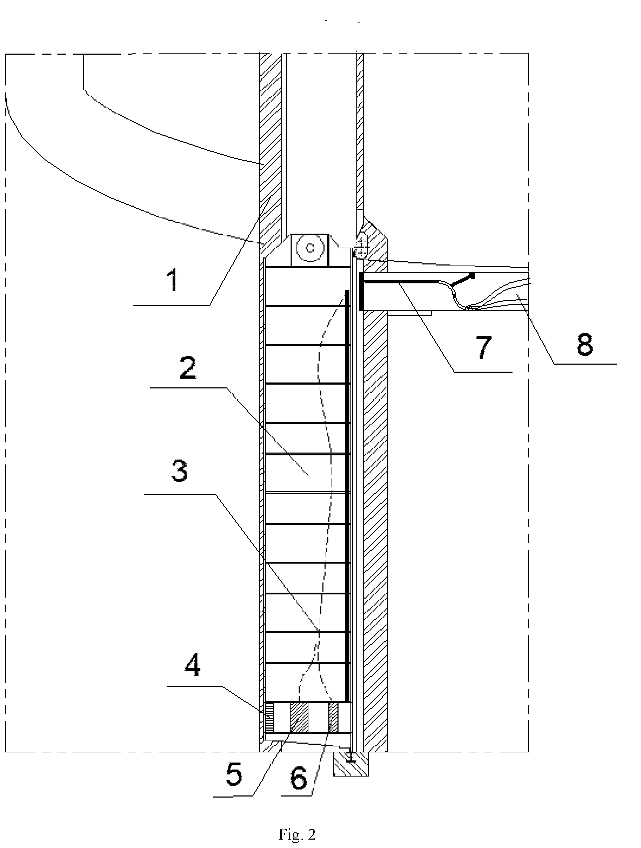

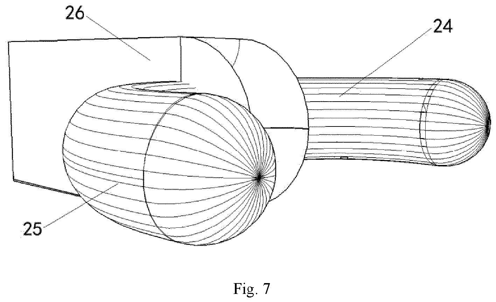

As shown in Figures 1-7, a specific embodiment of the gate water supplement device comprises: a dam body 1 provided with gate body and diversion tunnel 8, wherein the gate body 2 rises and falls along the guide groove 13 of the dam body 1; and a control structure arranged in the dam body 1.

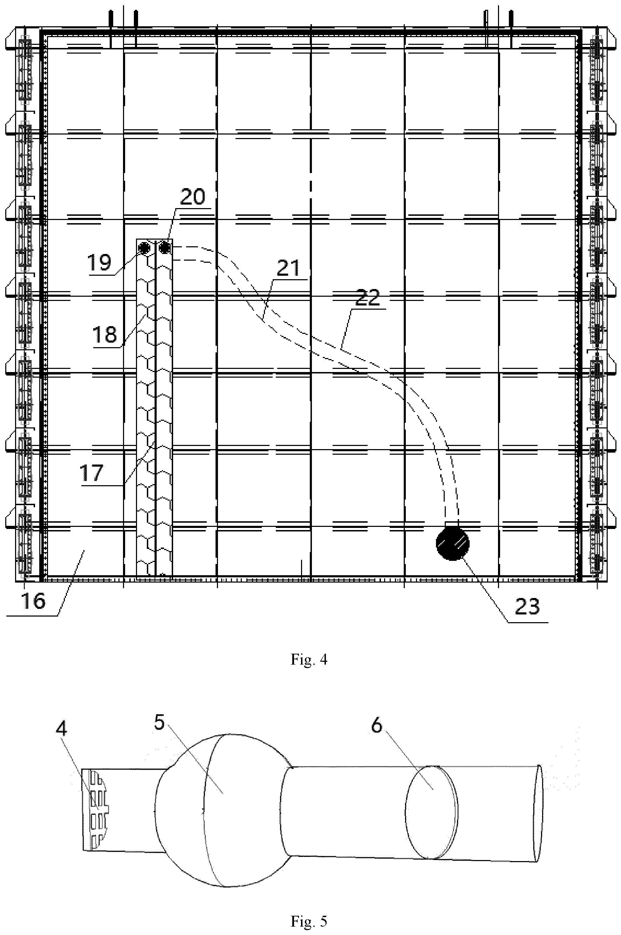

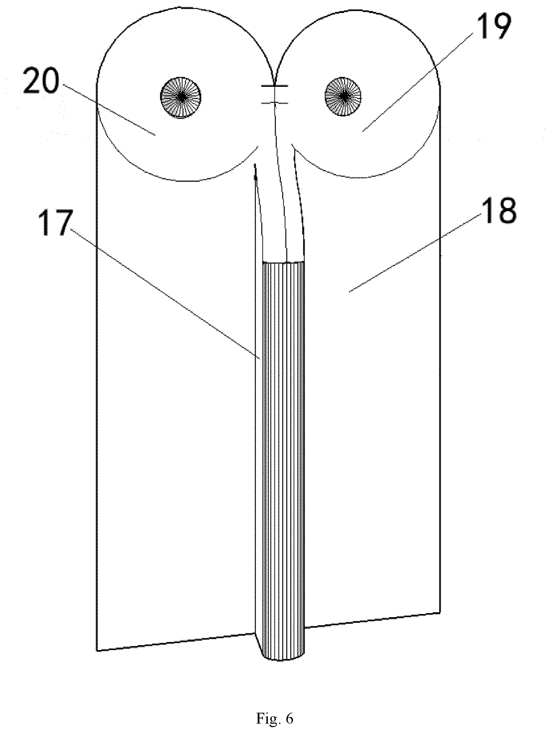

As shown in Figures 1-2 and 4, the lift and fall of the gate body 2 is controlled by the elevator 14 at the top of dam body 1. The lower part 16 of the gate body 2 is provided with an ecological water supplement channel 23, that is, the ecological water supplement channel 23 passes through the gate body. In order to control the water flow in the ecological water supplement channel 23, the ecological water supplement channel 23 is provided with a first opening and closing member 5 and a second opening and closing member 6. Specifically, the first opening and closing member 5 and the second opening and closing member 6 are valves. It should be noted that the first opening and closing member 5 and the second opening and closing member 6 can be opened or closed by manual adjustment under the extreme state of power failure. As shown in Figure 5, in order to avoid fish or dirt flowing into the ecological water supplement channel 23, the water inlet of the ecological water supplement channel 23 is also provided with a slag blocking grille 4, a contactor member 18 is arranged on the downstream face of the gate body to correspond with the diversion tunnel 8. As shown in Figure 6, the contactor member 18 is provided with a signal guide groove and a power supply guide groove along the height direction. The upper end of the signal guide groove is respectively provided with a signal terminal 19, and the upper end of the power supply guide groove is respectively provided with a power supply terminal 20, wherein the signal terminal 19 and the power supply terminal 20 are both conical opening structures. In order to facilitate the contact between the contactor and the contactor end when the gate body 2 falls, the upper openings of the signal terminal 19 at the upper end of the signal guide groove and the power supply terminal 20 at the upper end of the power supply guide groove are configured as a upward groove type. In order to avoid signal interference between the signal guide groove and the power supply guide groove, as shown in Figure 6, an insulating pad 17 is arranged between the signal terminal 19 and the power supply terminal 20. It should be noted that the height of the insulating pad is lower than the height of the water seal of the gate body 2, so as to avoid affecting the normal operation of the gate body 2. In order to connect to the first opening and closing member 5 and the second opening and closing member 6, the signal terminal 19 is connected to the first opening and closing member 5 and the second opening and closing member 6 respectively through signal line 21, and the power supply terminal 20 are connected to the first opening and closing member 5 and the second opening and closing member 6 respectively through the power supply line 21, wherein the signal line 21 and power supply line 22 are both arranged in a protective tube 3. In order to avoid signal interference between signal line 21 and power supply line 22, an insulating plate is arranged between signal line 21 and power supply line 22.

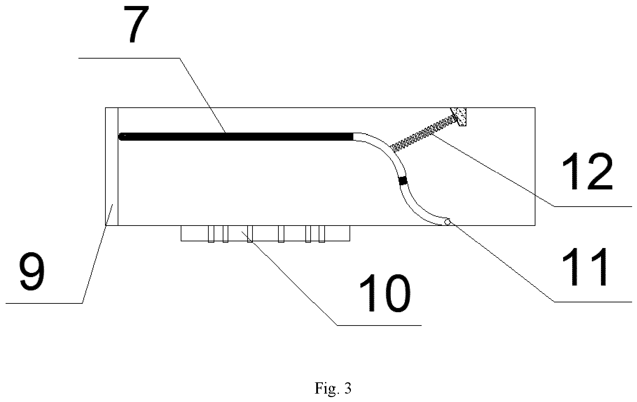

As shown in Figures 1-2, a control structure is arranged in the dam body 1, wherein one end of the diversion tunnel 8 is provided with a controller 15, and the other end of the diversion tunnel 8 is provided with a contactor frame 7, that is, the contactor frame 7 is arranged towards the downstream face of the gate body 2. In order to connect the controller 15 and the contactor frame 7, the gate water supplement device also comprises the line between the contactor frame 7 and the controller 15, as well as the tube body 11 which is sleeved around the line, wherein the tube body 11 is arranged in the diversion tunnel 8 to protect the line. The tube body 11 can be buried in the dam body 1 during the pouring process of the dam body 1, which is convenient and simple to set. Specifically, the material of the tube body 11 is steel tube. In order to prevent the water entering the tube body 11 from affecting the internal line, the top of the tube body 11 is arranged with a water seal plate to prevent the water in the diversion tunnel 8 from entering the tube body 11. The line comprises signal line 21 and power supply line 22. In order to push the contactor frame 7 to move towards the gate body 2, as shown in Figure 3, the gate water supplement device further comprises an elastic member 12 arranged between the tube body 11 and the contactor frame 7. The structure of the contactor frame 7 is preferably arc-shaped structure. Specifically, the elastic member 12 is a spring. The elastic member 12 drives the contactor frame 7 to move, so that the signal terminal 19 and the power supply terminal 20 of the contactor frame 7 enter the signal terminal 19 and the power supply terminal 20 along the configuration of the conical opening structure, realizing adaptive adjustment to solve the problem that the gate body 2 does not fall in place.

In order to prevent the contactor frame 7 from moving arbitrarily towards the gate body 2, a sealing cover plate 9 is arranged at one end of the tube body 11 towards the gate body 2, and the sealing cover plate 9 is connected to the controller 15 through signal. Specifically, the sealing cover plate 9 is made of cork. In order to contact the signal terminal 19 and the power supply terminal 20 of the contactor frame 7, as shown in Figure 6, the contactor frame 7 is provided with a signal contactor 24 adapted to the signal terminal 19 and a power supply contactor 25 adapted to the power supply terminal 20, wherein the signal contactor 24 is plugged with the signal terminal 19, and the power supply contact 25 is plugged with the power supply terminal 20. In order to facilitate the rotation of the contactor frame 7, a clapboard groove 26 is arranged between the signal contactor 24 and the power supply contactor 25, that is, the "arch" contactor frame 7 can rotate around the clapboard groove 26 with hinge points, so that the signal contactor 24 can smoothly enter the signal terminal 19 and the power supply contact 25 can enter the power supply terminal 20, achieving accurate docking. In order to facilitate the installation, removal and maintenance of contactor frame 7, as shown in Figure 3, a manhole 10 and an access cover plate used for the seal the manhole 10 are arranged on the side wall of tube body 11 close to gate body 2. The access cover plate is used to seal the manhole to avoid air leakage, water leakage and other problems.

In the specific implementation process, the gate body 2 is lifted and lowered by the elevator 14. Before the gate body 2 falls to the predetermined position, the controller 15 controls the sealing end cover to be in a sealed state, that is, the contactor frame 7 is completely located in the tube body 11, and the elastic member 12 is in a compressed state simultaneously. When the gate body 2 quickly falls to the predetermined position under the action of the elevator 14, the controller 15 opens the sealing cover plate 9, the elastic member 12 applies the force to the contactor frame 7 to move towards the gate body 2, the signal contactor 24 and the power supply contactor 25 of the contactor frame 7 move towards the gate body 2, and the signal contactor 24 enters the conical opening structure of the signal end 19 below the signal guide groove, and the power supply contactor 25 enters into the conical opening structure of the power supply terminal 20 below the power supply guide groove. The signal contactor 24 moves along the signal guide groove, and the power supply contactor 25 moves along the power supply guide groove until the gate body 2 drops to the predetermined position, the signal contactor 24 is successfully plugged into the signal terminal 19 above the signal guide groove, the power supply contactor 25 is successfully plugged into the power supply terminal 20 above the power supply guide groove, and meanwhile, the clapboard groove 26 is clamped into the insulating pad 17. During the dam construction, gate lowering, impoundment and operation, the remote control room remotely controls the controller 15 according to the data of the water pressure detection probe. When water supplement is required, the controller 15 will send a signal to open the first opening and closing member 5 and the second opening and closing member 6 successively to supply water to the outside. The water flow can also be controlled through the first opening and closing member 5 and the second opening and closing member 6. When water supplement is not required, the controller 15 sends a signal to close the first opening and closing member 5 and the second opening and closing member 6. In extreme cases where the remote control function of the first opening and closing member 5 and the second opening and closing member 6 is damaged, if the first opening and closing member 5 and the second opening and closing member 6 need to be opened, the personnel will enter along the diversion tunnel 8 and open them manually after reaching the first opening and closing member 5 and the second opening and closing member 6. It should be noted that the manual control mode is only used as an emergency standby mode.

As an alternative embodiment, the ecological water supplement channel 23 can also be provided with opening and closing member such as a third opening and closing member, a fourth opening and closing member and so on.

As an alternative embodiment, the sealing cover plate 9 can also be made of plastic, steel plate and other materials.

As an alternative embodiment, when the sealing cover plate 9 is opened, the sealing cover plate 9 can be opened by pressurizing and blowing air from the air compressor into the tube body 11. When the pressure in the tube body reaches a preset value, the sealing cover plate 9 will be opened under pressure.

As an alternative embodiment, the signal terminal 19 and the power supply terminal 20 can also be a horn-type opening structure, so as to facilitate accurate docking between the contactor and the contactor end.

As an alternative embodiment, in order to detect the water level and water pressure in the dam, the dam body 1 is also provided with a water pressure detection probe and a remote control room, wherein the remote control room is respectively connected to the water pressure detection probe, the elevator 14 and the controller 15 through signal. The water pressure detection probe transmits the data to the remote control room. When the water pressure reaches the set value (for example, when the reservoir water level rises to meet the conditions for discharging), the remote control room sends instructions to the controller 15, and the opening and closing member is opened or closed through the controller 15 to achieve automatic control.

Of course, this embodiment does not specifically define the connection mode between the signal contactor 24 and the signal terminal 19, and the connection mode between the power supply contactor 25 and the power supply terminal 20. In other embodiments, the signal contactor 24 and the signal terminal 19, and the power supply contact 25 and the power supply terminal 20 can also be connected through wireless transmission communication respectively.

The gate water supplement device provided by the present invention has the following advantages: (1) the way of arranging ecological water supplement holes on the gate body of the diversion tunnel is innovatively adopted, which solves the problem of large investment of resources and long-time consumption when side holes are separately dug or special ecological water supplement channel is set beside the diversion tunnel adopted in traditional ecological water supplement, and the continuity and convenience of ecological water supplement and gate lowering is guaranteed; (2), the problem that it is difficult to close the water supplement valve is solved and the risk that the valve of water supplement hole cannot be effectively closed is reduced through the unique structural configuration and the reliable configuration of "three in one" (remote control, water pressure detection control, manual control) for valve closure, and the safety and reliability of the operation of ecological water supplement hole are ensured; (3) high degree of automation: the water pressure is detected in real time by arranging a water pressure detection probe in the pipe of the water supplement hole, and the data is transmitted to the control switch connected to the opening and closing device of the control valve, and when the water pressure reaches the set value, the automatic closing is realized; (4) the device has simple structure and strong versatility: in addition to the downstream ecological water supplement during the gate lowering and impoundment stage of the hydropower station, the present water supplement device is applicable when there is a demand for downstream water supplement during the lowering other type of gate or operation; (5) the equipment cost is low and the resource input is small, in particular, the configuration of the present water supplement device can be synchronously completed at the beginning of the gate configuration, and the present water supplement device can be synchronously installed in place during the gate installation and diversion tunnel construction without additional work.

Obviously, the above embodiments are only examples for clear explanation, not for limitation of embodiments. For an ordinary person skilled in the art, other changes or amendments in different forms can be made on the basis of the above mentioned description. It is unnecessary and impossible to enumerate all embodiments here. The obvious changes or amendments arising therefrom are still within the protection scope of the present invention, that is defined by the appended claims.

## Claims

1. A gate water supplement device, comprising:
a gate body (2) configured to be arranged in a dam body (1), wherein a lower part (16) of the gate body (2) is provided with an ecological water supplement channel (23), an opening and closing member is provided in the ecological water supplement channel (23), the downstream surface of the gate body (2) is provided with a contactor member (18) which is communicated with the opening and closing member through lines;
a control structure configured to be arranged in the dam body (1), wherein the control structure comprises a controller (15) and a contactor frame (7) arranged towards the downstream surface, the controller (15) is communicated with the contactor frame (7) through lines, after the gate body (2) falls to a predetermined position, the contactor frame (7) is in contact with the contactor member (18), the controller (15) controls the opening or closing of the opening and closing member through lines to control the water flow in the ecological water supplement channel (23).

2. The gate water supplement device according to claim 1, **characterized in that**, the contactor member (18) comprises a signal terminal (19) and a power supply terminal (20); the contactor frame (7) is provided with a signal contactor (24) and a power supply contactor (25) adapted to the contactor member (18), the signal contactor (24) is plugged with the signal terminal (19), and the power supply contactor (25) is plugged with the power supply terminal (20).

3. The gate water supplement device according to claim 2, **characterized in that**, the signal terminal (19) and the power supply terminal (20) are both conical opening structure, the signal contactor (24) of the contactor frame (7) extends into the opening of the signal terminal (19), and the power supply contactor (25) extends into the opening of the power supply terminal (20), the contactor frame (7) is an arch structure.

4. The gate water supplement device according to claim 3, **characterized in that**, a power supply line (22) and a signal line (21) are connected between the contactor frame (7) and the controller (15), the power supply line (22) and the signal line (21) are connected between the contactor member (18) and the opening and closing member, and the power supply line (22) and the signal line (21) are arranged on the insulating plate.

5. The gate water supplement device according to claim 3, **characterized in that**, an insulating pad (17) is arranged between the signal terminal (19) and the power supply terminal (20).

6. The gate water supplement device according to claim 4, **characterized by** further comprising a tube body (11) arranged in the dam body (1), wherein a line between the contactor frame (7) and the controller (15) is arranged in the tube body (11), and the contactor frame (7) is at least partially arranged in the tube body (11).

7. The gate water supplement device according to claim 6, **characterized in that**, an elastic member is arranged between the contactor frame (7) and the tube body (11), and the elastic member is in a compressed state when the contactor frame (7) is not in contact with the contactor member (18).

8. The gate water supplement device according to claim 6, **characterized in that**, the end of the tube body (11) towards the gate body (2) is provided with a sealing cover plate (9) which is communicated with the controller (15) through signal.

9. The gate water supplement device according to any one of claims 1-8, **characterized in that**, the number of the opening and closing member in the ecological water supplement channel (23) is at least two, and each opening and closing member is connected with the power supply line (22) and the signal line (21).

10. The gate water supplement device according to claim 9, **characterized in that**, the water inlet of the ecological water supplement channel (23) is also provided with a slag blocking grille (4).

## Patentansprüche

1. Torwasserergänzungsvorrichtung, die umfasst:
einen Torkörper (2), der dazu ausgestaltet ist, in einem Dammkörper (1) angeordnet zu werden, wobei ein unterer Teil (16) des Torkörpers (2) mit einem Kanal (23) für ökologische Wasserergänzung versehen ist, ein Öffnungs- und Schließelement in dem Kanal (23) für ökologische Wasserergänzung vorgesehen ist, die nachgeschaltete Oberfläche des Torkörpers (2) mit einem Schützelement (18) versehen ist, das über Leitungen mit dem Öffnungs- und Schließelement in Kommunikationsverbindung steht;
eine Steuerstruktur, die dazu ausgestaltet ist, in dem Dammkörper (1) angeordnet zu werden, wobei die Steuerstruktur eine Steuerung (15) und ein Schützgehäuse (7) umfasst, das hin zu der nachgeschalteten Oberfläche angeordnet ist, die Steuerung (15) über Leitungen mit dem Schützgehäuse (7) in Kommunikationsverbindung steht, nachdem der Torkörper (2) in eine vorbestimmte Position gefallen ist, das Schützgehäuse (7) mit dem Schützelement (18) in Kontakt steht, die Steuerung (15) das Öffnen und Schließen des Öffnungs- und Schließelements über Leitungen steuert, um die Wasserströmung in dem Kanal (23) für ökologische Wasserergänzung zu steuern.

2. Torwasserergänzungsvorrichtung nach Anspruch 1, **dadurch gekennzeichnet, dass** das Schützelement (18) eine Signalklemme (19) und eine Stromversorgungsklemme (20) umfasst; das Schützgehäuse (7) mit einem Signalschütz (24) und einem Stromversorgungsschütz (25) versehen ist, die an das Schützelement (18) adaptiert sind, der Signalschütz (24) in die Signalklemme (19) eingesteckt ist und der Stromversorgungsschütz (25) in die Stromversorgungsklemme (20) eingesteckt ist.

3. Torwasserergänzungsvorrichtung nach Anspruch 2, **dadurch gekennzeichnet, dass** die Signalklemme (19) und die Stromversorgungsklemme (20) jeweils eine kegelförmige Öffnungsstruktur sind, der Signalschütz (24) des Schützgehäuses (7) sich in die Öffnung der Signalklemme (19) erstreckt und der Stromversorgungsschütz (25) sich in die Öffnung der Stromversorgungsklemme (20) erstreckt, das Schützgehäuse (7) eine Bogenstruktur ist.

4. Torwasserergänzungsvorrichtung nach Anspruch 3, **dadurch gekennzeichnet, dass** eine Stromversorgungsleitung (22) und eine Signalleitung (21) zwischen dem Schützgehäuse (7) und der Steuerung (15) verbunden sind, die Stromversorgungsleitung (22) und die Signalleitung (21) zwischen dem Schützelement (18) und dem Öffnungs- und Schließelement verbunden sind und die Stromversorgungsleitung (22) und die Signalleitung (21) auf der Isolierplatte angeordnet sind.

5. Torwasserergänzungsvorrichtung nach Anspruch 3, **dadurch gekennzeichnet, dass** ein Isolierpad (17) zwischen der Signalklemme (19) und der Stromversorgungsklemme (20) angeordnet ist.

6. Torwasserergänzungsvorrichtung nach Anspruch 4, **dadurch gekennzeichnet, dass** sie ferner einen Rohrkörper (11) umfasst, der in dem Dammkörper (1) angeordnet ist, wobei eine Leitung zwischen dem Schützgehäuse (7) und der Steuerung (15) in dem Rohrkörper (11) angeordnet ist und das Schützgehäuse (7) zumindest teilweise in dem Rohrkörper (11) angeordnet ist.

7. Torwasserergänzungsvorrichtung nach Anspruch 6, **dadurch gekennzeichnet, dass** ein elastisches Element zwischen dem Schützgehäuse (7) und dem Rohrkörper (11) angeordnet ist und das elastische Element in einem zusammengedrückten Zustand vorliegt, wenn das Schützgehäuse (7) nicht mit dem Schützelement (18) in Kontakt steht.

8. Torwasserergänzungsvorrichtung nach Anspruch 6, **dadurch gekennzeichnet, dass** das Ende des Rohrkörpers (11) hin zu dem Torkörper (2) mit einer Dichtungsabdeckplatte (9) versehen ist, die mit der Steuerung (15) in Signalkommunikationsverbindung steht.

9. Torwasserergänzungsvorrichtung nach einem der Ansprüche 1 bis 8, **dadurch gekennzeichnet, dass** die Anzahl des Öffnungs- und Schließelements in dem Kanal (23) für ökologische Wasserergänzung zumindest zwei beträgt und jedes Öffnungs- und Schließelement mit der Stromversorgungsleitung (22) und der Signalleitung (21) verbunden ist.

10. Torwasserergänzungsvorrichtung nach Anspruch 9, **dadurch gekennzeichnet, dass** der Wassereinlass des Kanals (23) für ökologische Wasserergänzung ebenfalls mit einem Schlackenauffanggitter (4) versehen ist.

## Revendications

1. Dispositif de porte pour ajout d'eau, comprenant :
un corps de porte (2) configuré pour être agencé dans un corps de barrage (1), dans lequel une partie inférieure (16) du corps de porte (2) est pourvue d'un canal d'ajout d'eau écologique (23), un élément d'ouverture et de fermeture est prévu dans le canal d'ajout d'eau écologique (23), la surface aval du corps de porte (2) est pourvue d'un élément de contacteur (18) qui communique avec l'élément d'ouverture et de fermeture à travers des lignes ;
une structure de commande configurée pour être agencée dans le corps de barrage (1), dans lequel la structure de commande comprend un dispositif de commande (15) et un cadre de contacteur (7) agencé vers la surface en aval, le dispositif de commande (15) communique avec le cadre de contacteur (7) à travers des lignes, après que le corps de porte (2) tombe dans une position prédéterminée, le cadre de contacteur (7) est en contact avec l'élément de contacteur (18), le dispositif de commande (15) commande l'ouverture ou la fermeture de l'élément d'ouverture et de fermeture à travers des lignes pour commander le flux d'eau dans le canal d'ajout d'eau écologique (23).

2. Dispositif de porte pour ajout d'eau selon la revendication 1, **caractérisé en ce que** l'élément de contacteur (18) comprend une borne de signal (19) et une borne d'alimentation électrique (20) ; le cadre de contacteur (7) est pourvu d'un contacteur de signal (24) et d'un contacteur d'alimentation électrique (25) adaptés à l'élément contacteur (18), le contacteur de signal (24) est branché à la borne de signal (19), et le contacteur d'alimentation électrique (25) est branché à la borne d'alimentation électrique (20).

3. Dispositif de porte pour ajout d'eau selon la revendication 2, **caractérisé en ce que** la borne de signal (19) et la borne d'alimentation électrique (20) sont toutes deux une structure à ouverture conique, le contacteur de signal (24) du cadre de contacteur (7) s'étend dans l'ouverture de la borne de signal (19), et le contacteur d'alimentation électrique (25) s'étend dans l'ouverture de la borne d'alimentation électrique (20), le cadre de contacteur (7) est une structure en arc.

4. Dispositif de porte pour ajout d'eau selon la revendication 3, **caractérisé en ce qu'**une ligne d'alimentation électrique (22) et une ligne de signal (21) sont reliées entre le cadre de contacteur (7) et le dispositif de commande (15), la ligne d'alimentation électrique (22) et la ligne de signal (21) sont reliées entre l'élément de contacteur (18) et l'élément d'ouverture et de fermeture, et la ligne d'alimentation électrique (22) et la ligne de signal (21) sont agencées sur la plaque isolante.

5. Dispositif de porte pour ajout d'eau selon la revendication 3, **caractérisé en ce qu'**un tampon isolant (17) est agencé entre la borne de signal (19) et la borne d'alimentation électrique (20).

6. Dispositif de porte pour ajout d'eau selon la revendication 4, **caractérisé en ce qu'**il comprend en outre un corps de tube (11) agencé dans le corps de barrage (1), dans lequel une ligne entre le cadre de contacteur (7) et le dispositif de commande (15) est agencée dans le corps de tube (11), et le cadre de contacteur (7) est au moins partiellement agencé dans le corps de tube (11).

7. Dispositif de porte pour ajout d'eau selon la revendication 6, **caractérisé en ce qu'**un élément élastique est agencé entre le cadre de contacteur (7) et le corps de tube (11), et l'élément élastique est dans un état comprimé lorsque le cadre de contacteur (7) n'est pas en contact avec l'élément de contacteur (18).

8. Dispositif de porte pour ajout d'eau selon la revendication 6, **caractérisé en ce que** l'extrémité du corps de tube (11) vers le corps de porte (2) est pourvue d'une plaque de recouvrement d'étanchéité (9) qui communique avec le dispositif de commande (15) à travers un signal.

9. Dispositif de porte pour ajout d'eau selon l'une quelconque des revendications 1 à 8, **caractérisé en ce que** le nombre d'éléments d'ouverture et de fermeture dans le canal d'ajout d'eau écologique (23) est d'au moins deux, et chaque élément d'ouverture et de fermeture est connecté à la ligne d'alimentation électrique (22) et à la ligne de signal (21).

10. Dispositif de porte pour ajout d'eau selon la revendication 9, **caractérisé en ce que** l'entrée d'eau du canal d'ajout d'eau écologique (23) est également pourvue d'une grille de blocage de scories (4).
